# EUROPÄISCHE PATENTANMELDUNG

(11) **EP 2 058 650 A1**
(43) Veröffentlichungstag der Anmeldung: **13.05.2009**
(21) Anmeldenummer: 08167044.0
(22) Anmeldetag: 20.10.2008
(51) Int. Cl.: G01N 27/407

(54) **Sensorelement mit Festelektrolyt und isoliertem leitenden Element**

(30) Priorität: 09.11.2007 DE 102007053427
(71) Anmelder: Robert Bosch GmbH, 70442 Stuttgart (DE)
(72) Erfinder: Runge, Henrico, 70435 Stuttgart (DE); Heimann, Detlef, 70839 Gerlingen (DE); Buse, Frank, 76227 Karlsruhe (DE)

(57) **Zusammenfassung**

Die Erfindung betrifft ein Sensorelement zur Messung mindestens einer Eigenschaft eines Gases in einem Gasraum, insbesondere zur Bestimmung einer Sauerstoffkonzentration im Abgas einer Brennkraftmaschine. Das Sensorelement umfasst mindestens eine Festelektrolytschicht (110) umfasst, auf welcher mindestens ein leitendes Element (136; 310, 312) angeordnet ist. Zwischen dem leitenden Element (136; 310, 312) und der Festelektrolytschicht (110) ist mindestens eine Isolationsschicht (130) angeordnet. Die Isolationsschicht (130) weist eine Pyrochlor-Phase (132) auf.

## Beschreibung

### Stand der Technik

Die Erfindung geht aus von bekannten Sensorelementen, welche auf elektrolytischen Eigenschaften bestimmter Festkörper beruhen, also der Fähigkeit dieser Festkörper, bestimmte Ionen zu leiten. Derartige Sensorelemente werden insbesondere in Kraftfahrzeugen eingesetzt, um Luft-Kraftstoff-Gasgemischzusammensetzungen zu messen. Insbesondere werden Sensorelemente dieser Art in sogenannten "Lambdasonden" eingesetzt, und spielen eine wesentliche Rolle bei der Reduzierung von Schadstoffen in Abgasen, sowohl in Ottomotoren als auch in der Dieseltechnologie. Auch auf andere Arten von Sensorelementen, welche Festelektrolyte der beschriebenen Art umfassen, ist die Erfindung jedoch anwendbar, also neben Sprungsonden und Breitbandsonden beispielsweise auch auf Partikelsensoren oder ähnliche Arten von Sensoren mit Festelektrolyten. Ohne Beschränkung des Schutzumfangs wird im Folgen die Erfindung am Beispiel von Lambdasonden erläutert, wobei jedoch, im Lichte der obigen Ausführungen, auch andere Arten von Sensorelementen hergestellt können. Die Erfindung betrifft ein Sensorelement sowie ein Verfahren zur Herstellung eines Sensorelements, insbesondere eines erfindungsgemäßen Sensorelements.

Mit der sogenannten Luftzahl "Lambda" (λ) wird allgemein in der Verbrennungstechnik das Verhältnis zwischen einer tatsächlich angebotenen Luftmasse und einer für die Verbrennung theoretisch benötigten (d.h. stechometrischen) Luftmasse bezeichnet. Die Luftzahl wird dabei mittels eines oder mehrer Sensorelemente zumeist an einer oder mehreren Stellen im Abgastrakt eines Verbrennungsmotors gemessen. Entsprechend weisen "fette" Gasgemische (d.h. Gasgemische mit einem Kraftstoffüberschuss) eine Luftzahl λ< 1 auf, wohingegen "magere" Gasgemische (d.h. Gasgemische mit einem Kraftstoffunterschuss) eine Luftzahl λ >1 aufweisen. Neben der Kraftfahrzeugtechnik werden derartige und ähnliche Sensorelemente auch in anderen Bereichen der Technik (insbesondere der Verbrennungstechnik) eingesetzt, beispielsweise in der Luftfahrttechnik oder bei der Regelung von Brennern, z.B. in Heizanlagen oder Kraftwerken. Aus dem Stand der Technik sind zahlreiche verschiedene Ausführungsformen der Sensorelemente bekannt und werden beispielsweise in Robert Bosch GmbH: "Sensoren im Kraftfahrzeug", Juni 2001, Seite 112-117 oder in T. Baunach et al.: "Sauberes Abgas durch Keramiksensoren", Physikjournal 5(2006) Nr. 5, Seiten 33-38, beschrieben.

Lambdasonden sind in verschiedenen Ausführungsformen bekannt. Eine erste Ausführungsform stellt die sogenannte "Sprungsonde" dar, deren Messprinzip auf der Messung einer elektrochemischen Potenzialdifferenz zwischen einem Referenzgas und dem zu messenden Gasgemisch beruht. Referenzelektrode und Messelektrode sind über den Festelektrolyten miteinander verbunden. Als Festelektrolyt wird aufgrund seiner guten Sauerstoffionenleitenden Eigenschaften in der Regel Zirkondioxid (z.B. Yttrium-stabilisiertes Zirkondioxid, YSZ) oder ähnliche Keramiken eingesetzt. Alternativ oder zusätzlich zu Sprungsonden, kommen auch sogenannte "Pumpzellen" zum Einsatz, bei denen eine elektrische "Pumpspannung" an zwei über den Festelektrolyten verbundene Elektroden angelegt wird, wobei der "Pumpstrom" durch die Pumpzelle gemessen wird. Die beschriebenen Sensorprinzipien von Sprungzellen und Pumpzellen lassen sich vorteilhaft auch kombiniert einsetzen in sogenannten "Mehrzellern".

Eine allgemein bekannte Problematik bei der Herstellung von Sensorelementen, welche auf einem oder mehreren Festelektrolyten basieren, besteht darin, dass beim Schichtaufbau häufig leitende Elemente, wie beispielsweise elektrische Zuleitungen, Kontaktflächen oder elektrische Durchkontaktierungen, auf, in oder unter dem Festelektrolyten hergestelt werden müssen, welche nicht in leitendem Kontakt mit dem Festelektrolyten stehen dürfen. Würden diese Elemente einfach auf den Festelektrolyten aufgebracht werden oder anderweitig mit diesem in Kontakt gebracht, so könnten diese Elemente auf unerwünschte Weise die Rolle von Elektroden übernehmen, welche den Festelektrolyten kontaktieren und die Funktionsweise des Sensorelements beeinträchtigen. Die leitenden Elemente werden daher in der Regel durch Isolationsschichten elektrisch gegen den Festelektrolyten isoliert.

Aus dem Stand der Technik sind verschiedene Verfahren bekannt, derartige Isolationsschichten zu erzeugen. So beschreibt DE 44 39 883 A1 ein Isolationsschichtsystem mit mindestens einer elektrisch leitenden Festelektrolytschicht, einer elektrisch leitenden Schicht und mindestens einer elektrisch isolierenden Schicht zwischen der Festelektrolytschicht und der elektrisch leitenden Schicht. Das Material der isolierenden Schicht enthält vor dem Sintern 5-wertige Metalloxide des Niobs oder Tantals als Zusatzstoff. Der Zusatzstoff ist derart ausgewählt, dass dieser beim Sintern in die angrenzende Festelektrolytschicht einzudiffundieren vermag. Auf diese Weise werden in der Regel in der angrenzenden Festelektrolytschicht Oxidionenleerstellen zerstört, wodurch die Ladungsträgerkonzentration sinkt und die Leitfähigkeit des Festelektrolyten erheblich gesenkt wird.

Neben Zuleitungen oder anderen flächigen leitenden Elementen macht sich die beschriebene Isolationsproblematik besonders auch bei Durchkontaltierungen bemerkbar. So müssen beispielsweise häufig elektrische Bauteile und Elemente, wie beispielsweise elektrische Kontaktflächen und/oder elektrische Zuleitungen, welche sich in tiefergelegenen Schichtebenen eines Schichtaufbaus des Sensors befinden, elektrisch kontaktiert werden. Zu diesem Zweck werden elektrische Durchkontaktierungen hergestellt, welche, beispielsweise von einer Oberseite oder einer Unterseite des Mehrschichtaufbaus, eine elektrische Kontaktierung dieses tieferliegenden elektrischen Elements ermöglichen. Derartige Durchkontaktierungen werden oft auch als "Vias" bezeichnet.

Die Herstellung derartiger Durchkontaktierungen ist technisch in vielen Fällen sehr aufwendig, da mehrere Verfahrensschritte erforderlich sind. Beispiele derartiger Durchkontaktierungen, auf welchen die vorliegende Erfindung aufbaut, sind in DE 4 312 976 A1, in DE 100 14 995 C1 und in DE 10 2004 025 949 A1 dargestellt. Die dort gezeigten Ausführungsbeispiele und Herstellungsverfahren verdeutlichen insbesondere die Komplexität eines derartigen Aufbaus. So wird beispielsweise in DE 100 14 995 C1 ein Aufbau beschrieben, bei welchem eine Öffnung im Festelektrolyten zunächst mit einem Isolationsmaterial benetzt wird, welches anschließend in einem Sinterschritt eine Isolationsschicht innerhalb der Öffnung bildet. In diese Isolationsschicht werden anschließend Kontaktflächen eingebracht, welche gegen den Festelektrolyten durch die Isolationsschicht isoliert sind. Ein bekanntes Beispiel derartiger Isolationsmaterialien sind Pasten, welche Aluminiumoxid, insbesondere Al₂O₃, enthalten. Ähnliche Aufbauten werden auch in DE 10 2004 025 949 A1 beschrieben.

Eine weitere Problematik bekannter Aufbautechniken und Herstellungsverfahruen zur Herstellung von flächigen Isolationsschichten und/oder isolierten Durchkontaktierungen besteht darin, dass die Isolationsfestigkeit der Isolationsschichten in vielen Fällen unbefriedigend ist und dass eine vergleichsweise hohe Fehlerquote auftreten kann. So können sich in den verwendeten Isolationsschichten leicht Risse bilden, welche die Isolationsfestigkeit in Betrieb beeinträchtigen.

Diese Problematik der in vielen Fällen nicht ausreichenden Isolationsfestigkeit bekannter Techniken zur Herstellung flächiger Isolationsschichten und/oder zur Herstellung von Durchkontaktierungen wird sich in Zukunft darüber hinaus insbesondere bei Lambdasonden verschärfen, da ein Trend hin zu kürzeren Bauelementen existiert. Derartige kurzbauende Sensoren bewirken, dass sich der Abstand zwischen den in den Sensoren üblicherweise enthaltenen Heizelementen und den Durchkontaktierungen erheblich verkürzt. Dadurch werden die Isolationsschichten und/oder die isolierten Durchkonkaktierungen im Betrieb einer erhöhten Temperaturbelastung ausgesetzt, was wiederum zu thermischen Spannungen im Übergangsbereich zwischen der Isolationsschicht und dem Festelektrolyten und/oder zwischen der Isolationsschicht und dem leitfähigen Teil der Durchkontaktierung bzw. dem leitfähigen Element hervorrufen kann. Insbesonere spielen hier die unterschiedlichen Wärmeausdehnungskoeffizienten der einzelnen Materialien eine erhebliche Rolle. Auch der Abstand zwischen den Dichtpackungen, welche den Abgastrakt vom Außenraum trennen und den Durchkontaktierungen außerhalb des Abgastraktes wird bei kurzbauenden Sensoren stark verringert, so dass auch das heiße Gehäuse der Sensoren in vielen Fällen zum Wärmeeintrag in die Isolierungen und somit zur erhöhten Temperaturbelastung dieser Isolierungen beitragen kann. Entsprechend können bei modernen Sensoren im Bereich der Isolationsschichten heute Temperaturen von circa 600°C bis hin zu 800°C auftreten, wohingegen Isolationsschichten gemäß dem Stand der Technik typischerweise lediglich bis 400°C ausgelegt sind. Die bekannten Isloationstechniken, wie beispielsweise die Technik der in der DE 44 39 883 A1 beschriebenen Zerstörung der Oxidionenleerstellen, sind derartigen Temperaturbelastungen in vielen Fällen nicht gewachsen, was zu Bauteilausfällen oder Funktionsstörungen des Sensorelemente führen kann.

### Offenbarung der Erfindung

Es wird daher ein Sensorelement zur Messung mindestens einer Eigenschaft eines Gases in einem Gasraum vorgeschlagen sowie ein Verfahren zur Herstellung eines Sensorelements, insbesondere ein Verfahren zur Herstellung eines erfindungsgemäßen Sensorelements in einer der nachfolgend beschriebenen Ausführungsformen. Das vorgeschlagene Sensorelement und das vorgeschlagene Herstellungsverfahren tragen erheblich zur Vermeidung der oben beschriebenen Nachteile bekannter Sensorelemente und Herstellungsverfahren bei und ermöglichen eine einfache und zuverlässige Herstellung leitender Elemente und Durchkontaktierungen, welche auch für hohe Temperaturbelastungen geeignet sind. Dabei wird insbesondere die oben beschriebene Rissbildung, insbesondere eine durch thermomechanische Belastungen und durch unvollständige Bedeckung des Festelektrolyten mit Isolationsmaterial hervorgerufene Leckstromproblematik stark vermindert. Die Erfindung beruht darauf, dass zur Erhöhung der Prozesssicherheit sowie der Isolationsfestigkeit die Verwendung neuer und modifizierter Isolierungsmaterialien vorgeschlagen wird, die eine zusätzliche isolierende Wirkung durch die Ausbildung einer Grenzschicht zwischen dem leitenden Element und dem Substratmaterial bewirken.

Das vorgeschlagene Sensorelement kann ein beliebiges Sensorelement der oben beschriebenen Art aufweisen und soll zur Messung mindestens einer Eigenschaft eines Gases in einem Gasraum geeignet sein. Insbesonere kann es sich dabei, wie oben dargestellt, um ein Sensorelement zur Bestimmung einer Sauerstoffkonzentration im Abgas einer Brennkraftmaschine handeln. Auch andere Arten von Sensorelementen, welche auf einer Festelektrolytschicht basieren, sind jedoch denkbar. Unter einer Festelektrolytschicht ist dabei ein Material zu verstehen, welches ionenleitende Eigenschaften aufweist, insbesondere auf Gitterleerstellen beruhende ionenleitende Eigenschaften. Der Ausdruck "Schicht" ist hierbei unabhängig von der geometrischen Ausgestaltung verwendet, so dass die Festelektrolytschicht eine beliebige geometrische Form, beispielsweise eine Form eines ebenen, flchen Quaders, eines Stabes, eines Plättchens oder eine andere Form annehmen kann, je nach den Erfordernissen des Sensorelements.

Dabei können verschiedene Arten von Festelektrolyten eingesetzt werden. Besonders bevorzugt ist es jedoch, wenn die Festelektrolytschicht, welche naturgemäß auch aus mehreren einzelnen Schichten zusammengesetzt sein kann, eine ZrO₂ -Festelektrolytschicht umfasst.

Die Festelektrolytschicht soll derart ausgestaltet sein, dass auf dieser bzw. in dieser (z.B. bei einer Durchkontaktierung) mindestens ein leitendes Element angeordnet ist. Zwischen dem leitenden Element und der Festelektrolytschicht ist mindestens eine Isolationsschicht angeordnet ist.

Das mindestens eine leitende Element kann dabei je nach den Erfordernissen des Sensorelements ausgestaltet sein. So ist es insbesondere bevorzugt, wenn das leitende Element mindestens eines der folgenden leitenden Elemente umfasst: ein leitendes Element, durch welches mindestens zwei auf gegenüberliegenden Seiten der Festelektrolytschicht angeordnete elektrische Elemente elektrisch verbunden sind, insbesondere eine Durchkontaktierung; eine Leiterbahn auf einer Oberfläche der Festelektrolytschicht; eine Kontaktfläche auf einer Oberfläche der Festelektrolytschicht; eine elektrische Zuleitung auf einer Oberfläche der Festelektrolytschicht. Sind mehrere leitende Elemente vorgesehen (beispielsweise eine Zuleitung und eine Durchkontaktierung), so können diese und die zugehörigen Isolationsschichten (vorzugsweise ist pro leitendem Element je eine Isolationsschicht vorgesehen) gleichzeitig oder auch nacheinander hergestellt werden.

Eine Grundidee der Erfindung besteht, im Gegensatz zum Stand der Technik, darin, die notwendige erhöhte Isolationsfestigkeit, insbesondere bei Temperaturen von bis zu 600°C oder sogar darüber hinaus, durch die Ausbildung einer Pyrochlor-Isolationsschicht an der Grenzfläche zwischen Durchkontaktierung und Festelektrolytschicht herzustellen.

Dementsprechend wird vorgeschlagen, dass die Isolationsschicht eine derartige Pyrochlor-Phase enthält. Derartige Pyrochlor-Phasen, insbesondere im Zirkondioxid, weisen geringe Oxidionenleitfähigkeiten auf. Die Leitfähigkeiten derartiger Pyrochlor-Phasen werden beispielsweise in J.A. Labrincha et al.: "Protonic Conduction in La2Zr2O7-based pyrochlore materials, Solid State Ionics 99 (1997) 33-40, beschrieben.

Insbesondere kann die Pyrochlor-Phase derart ausgestaltet sein, dass die Isolationsschicht mindestens ein Lanthanid aufweist. Zu diesem Zweck kann insbesondere die Isolationsschicht Ln₂₊ₓZr₂₋ₓO_{7-x/2} aufweisen, insbesondere Ln₂Zr₂O₇, wobei Ln ein Element der Lanthanide ist. Insbesonder kann mindestens eines der folgenden Lanthanide vorgesehen sein: Lanthan, Samarium, Europium, Gadolinium. Dementsprechend kann die Isolationsschicht eine Oxidionenleitfähigkeit aufweisen, wobei die Gesamtleitfähigkeit (elektronische Leitfähigkeit und Oxidionenleitfähigkeit) bei 600°C bis 800°C im Bereich zwischen 10⁻² und 10⁻⁷ S/cm oder unterhalb dieses Bereichs liegt.

Diese Pyrochlor-Phase der Isolationsschicht kann entweder als eine separate Isolationsschicht aufgebracht werden oder kann eine Randschicht des eigentlichen leitenden Elements bilden. Diese verschiedenen Möglichkeiten werden unten näher erläutert. Eine Pyrochlor-Phase kann sich beispielsweise bei Verwendung von Yttrium-stabilisiertem Zirkondioxid (YSZ) beim Sintern des Sensorelements bilden, wenn einer Paste (beispielsweise einer Paste zum Herstellen von Zuleitungen oder einer Durchkontaktierungspaste) oder einer anderen Art von Vorstoff für die Herstellung eines leitenden Elements Lanthanoxid (La₂O₃) und/oder Lanthanaluminat (LaAlO₃) beigemischt wird. Der elektrische Widerstand von LaAlO₃ beispielsweise ist vergleichbar mit dem des Aluminiumoxids Beim Sintern reagiert zudem das Lanthanoxid oder Lanthanaluminat mit dem umgebenden Feststoffelektrolyten, beispielsweise Yttrium-stabilisiertem Zirkondioxid YSZ. Dabei bilden sich die oben beschriebenen Pyrochlor-Phasen an der Grenzfläche zwischen der Festelektrolytschicht und dem Isolationsmaterial, wodurch ein zusätzlicher Isolationseffekt hervorgerufen wird, da die elektrische Leitfähigkeit der sich bildenden Pyrochlor-Phase um in der Regel mehr als 3 Zehnerpotenzen geringer ist als die des YSZ. Beispielsweise kann hier an der Grenzfläche folgende Reaktion ablaufen: La₂O₃ (aus LaAlO₃) + 2 ZrO₂ → La₂Zr₂O₇.

Der Effekt der Pyrochlor-Phase erhöht die Isolationsfestigkeit durch zwei Effekte wesentlich: Zum einen wird die Isolationsfestigkeit dadurch erhöht, dass sich die Isolationsschicht bei der Reaktion des Lanthans bzw. Lanthanid mit dem Zirkon des YSZ-Substrats bzw. eines anderen Festelektrolyten erheblich vergrößert, da sich eine zusätzliche Pyrochlor-Phasen-Isolatorschicht ausbilden kann. Zum anderen können Kurzschlüsse bei kleinen Trocken- und/oder Sinterrissen einer ersten Isolationsschicht vermieden werden, da eine darunterliegende Pyrochlorschicht zusätzlich isolierend wirken kann.

Insbesondere ergibt sich dadurch der Vorteil, dass im Gegensatz zur Verwendung von beibeispielsweise reinem Al₂O₃ als Isolationsmaterial, bei welchem in der Regel eine doppelte Isolierung erforderlich ist, um eine vollständige Benetzung der Öffnung sowie ein Verschleißen von Trockenrissen zu gewährleisten und um eine ausreichende Isolation sicherzustellen, dies bei der Verwendung von Pyrochlor-Phasen in der Regel nicht mehr zwingend notwendig ist. So kann, beispielsweise durch die beschriebene Reaktion des La₂O₃ mit dem Zirkon und die damit verbundene zusätzliche örtliche Herabsetzung der Leitfähigkeit an der Grenzfläche zum Yttrium-stabilisierten Zirkonoxid eine Isolation durch lediglich einen einzigen Isolationsschritt erfolgen. Kleine Risse in der ursprünglichen Isolationsschicht (Isolationsschwachstellen) werden durch die darunter liegende, beim Sintern ausgebildete Pyrochlor-Phase abgefangen.

Mittels der dargestellten Pyrochlor-Phase lassen sich Widerstandswerte erzielen, welche in der Regel im Megaohm-Bereich bei den zu erwartenden Temperaturen um ca. 600°C aufweisen. Zudem ist eine Pyrochlor-Struktur, insbesondere die La₂Zr₂O₇-Pyrochlorstruktur, eine von der Fluoritstrukur des YSZ abgeleitete Struktur mit zusätzlichen Oxidionenleerstellen (1/8 des Oxidionengitters ist in der Regel nicht besetzt). Diese Oxidionenleerstellen sind jedoch lokalisiert, d.h. geordnet oder "gefangen" ("trapped"), was zu der um ein vielfaches geringeren Oxidionenleitfähigkeit führt, als diejenige, die für das YSZ gemessen wird. Die Ähnlichkeit in diesen Strukturen äußert sich auch in vergleichbaren thermischen Ausdehnungskoeffizienten. So liegen die thermischen Ausdehnungskoeffizienten für La₂Zr₂O₇ in der Regel bei 9,1 x 10⁻⁶ K⁻¹ in einem Temperaturbereich zwischen 293 und 1273 K, wohingegen für 8YSZ der thermische Ausdehnungkoeffizient bei 10,7 x 10⁻⁶ K⁻¹ für den angegebenen Temperaturbereich liegt. Dies bedeutet jedoch, dass eine gute Verbindung zwischen dem Festelektrolytmaterial und der Pyrochlor-Phase, insbesondere zwischen YSZ und La₂Zr₂O₇, erwartet wird. Dadurch wird auch bei hoher Temperaturbelastung das Auftreten von thermomechanischen Spannungen und damit verbundenen Beschädigungen der mindestens einen Isolationsschicht erheblich vermindert.

Zum Aufbau der Pyrochlor-Phase in der Isolationsschicht werden erfindungsgemäß verschiedene Konzepte vorgeschlagen, welche jedoch auch miteinander kombiniert werden können. Allen Konzepten und den entsprechenden Herstellungsverfahren ist gemeinsam, dass zunächst ein Vorstoff, insbesondere eine Paste, auf mindestens einen Bereich des Festelektrolyten aufgebracht wird. Anschließend wird der Festelektrolyt mit dem Vorstoff einer Wärmebehandlung, insbesondere einem Sinterschritt, unterzogen. Dieser Vorstoff ist dabei derart gewählt, dass dieser sich zumindest teilweise bei der Wärmebehandlung mit einem Teil der Festelektrolytschicht in eine Isolationsschicht umwandelt, wobei die Isolationsschicht eine Pyrochlor-Phase aufweist.

Unter einem "Vorstoff" wird hierbei wie im Folgenden ein verformbarer Stoff verstanden, welcher beispielsweise in Form einer Paste oder einer Flüssigkeit ausgestaltet sein kann und welcher beispielsweise durch Aufrakeln, Aufdrucken, Auftropfen oder auf andere Weise auf bzw. in die Öffnung auf- und eingebracht werden kann. Dieser Vorstoff soll den eigentlichen Funktionsstoff, also insbesondere einen Isolator, enthalten, so dass sich aus dem Vorstoff beim anschließenden Wärmebehandlungsschritt bzw. Sinterschritt der eigentliche Isolator durch chemische und/oder thermische Umwandlung bilden kann.

Die vorgeschlagenen erfindungsgemäßen Konzepte lassen sich in zwei mögliche Gruppen unterteilen, wobei auch Kombinationen der vorgeschlagenen Vorgehensweisen möglich sind. So kann ein erstes Konzept dahingehend ausgestaltet sein, dass das leitende Elemente und die Isolationsschicht gleichzeitig ausgebildet werden. Dieses Konzept kann beispielsweise dadurch realisiert werden, dass der Vorstoff mindestens eine erste Vorstoffkomponenete und mindestens eine zweite Vorstoffkomponente aufweist, welche gleichzeitig auf den Festelektrolyten aufgebracht werden. Dabei soll die erste Vorstoffkomponente derart gewählt sein, dass diese bei der Wärmebehandlung sich zumindest teilweise mit einem Teil der Festelektrolytschicht in die Isolationsschicht umwandelt, also die oben beschriebene Pyrochlor-Phase bildet. Zu diesem Zweck kann diese erste Vorstoffkomponente beispielsweise Lanthan oder ein anderes Lanthanid aufweisen, beispielsweise in Form von La₂O₃ und/oder LaAlO₃. Diese erste Vorstoffkomponente kann beispielsweise der zweiten Vorstoffkomponente, bei welcher es sich um eine Leitpaste und/oder eine Durchkontaktierungspaste handeln kann, beigemischt sein. Diese erste Vorstoffkoponente kann beispielsweise Platin- oder andere metallische Partikel enthalten, welche bei der Wärmebehandlung das leitende Element ausbilden und somit die Ausbildung des leitenden Elements (z.B. der Zuleitung und/oder der Durchkontaktierung) bewirken. Bei der Wärmebehandlung laufen also einerseits die oben beschriebenen chemischphysikalischen Prozesse der Ausbildung der Pyrochlor-Phase und somit der Isolationsschicht und andererseits die Ausbildung des leitenden Elements näherungsweise gleichzeitig ab. Diese Verfahrensvariante zeichnet sich also dadurch aus, dass Prozessschritte zur Erzeugung der Isolationsschicht eingespart werden können, da die Isolationsschicht gleichzeitig mit dem leitenden Element ausgebildet werden kann. Es ist jedoch auch möglich, zusätzliche Isolationsschichten herzustellen.

Vorzugsweise kann bei dem ersten Konzept der mindestens eine Vorstoff mindestens eine der folgenden Zusammensetzungen aufweisen: eine Mischung, umfassend Platin und ZrO₂; eine Mischung, umfassend Platin, Al₂O₃ und La₂O₃.

Bei einer zweiten Gruppe von Herstellungs- und Aufbaukonzepten wird, wie konventionell üblich, die mindestens eine Isolationsschicht und das mindestens eine leitende Element separat aufgebracht. In diesem Fall wird zunächst ein erster Vorstoff auf die mindestens eine Festelektrolytschicht (also z.B. auf eine ebene Oberfläche des Testelektrolyten und/oder in die Öffnung einer Durchkontaktierung) eingebracht, welcher sich später bei der Wärmebehandlung zumindest teilweise mit einem Teil der Festelektrolytschicht in die Isolationsschicht mit der Pyrochlor-Phase umwandelt. Dieser mindestens eine Vorstoff kann nach dem Aufbringen beispielsweise in einem Trocknungsschritt zunächst getrocknet werden. Anschließend kann mindestens ein zweiter Vorstoff auf die mindestens eine Festelektrolytschicht aufgebracht werden, welcher sich später, bei dem Wärmebehandlungsschritt, in das mindestens eine leitende Element umwandelt. Bei diesem Verfahrensschritt werden also durch die separate Aufbringung des ersten Vorstoffs und des zweiten Vorstoffs separat die Isolationsschicht und das leitende Element ausgebildet. Dies hat zwar den Nachteil, dass getrennte Verfahrensschritte erforderlich sind, kann sich jedoch dahingehend positiv auswirken, dass der mindestens eine erste Vorstoff und der mindestens eine zweite Vorstoff separat optimiert werden können. Zudem kann durch die Auswahl des ersten Vorstoffs und/oder dessen Verarbeitung auch die Schichtdicke der mindestens einen Isolationsschicht gezielt eingestellt werden. Zudem bleiben, trotz des zusätzlichen Isolationsschrittes, die oben beschriebenen Vorteile der Verwendung einer Pyrochlor-Phase hinsichtlich der Isolationsfestigkeit und der Unempfindlichkeit gegenüber Rissbildung, insbesondere durch thermomechanische Spannungen, erhalten.

Der mindestens eine erste Vorstoff kann bei dem zweiten Konzept beispielsweise LaAlO₃ und/oder eine Mischung von Al₂O₃ mit La₂O₃ aufweisen. Der mindestens eine zweite Vorstoff kann beispielsweise eine Mischung aufweisen, welche Platin, ZrO₂ und La₂O₃, umfasst.

Bei dem letztgenannten zweiten Verfahrens- und Aufbaukonzept bestehen verschiedene Möglichkeiten, den Pyrochlor-Phasen-Bildner in den ersten Vorstoff einzubringen.

So besteht eine erste Möglichkeit dieses zweiten Konzeptes darin, beispielsweise den Pyrochlor-Phasen-Bildner unmittelbar als ersten Vorstoff zu verwenden. Anstelle von Lanthan kann hier naturgemäß wieder auch, alternativ oder zusätzlich, ein anderes Lanthanid zum Einsatz kommen. Vorgeschlagen wird also eine erster Vorstoff, welche LaAlO₃ aufweist. Der elektrische Widerstand dieses Materials ist, wie oben beschrieben, vergleichbar mit dem üblicherweise als Durchisolationsmaterial verwendeten Al₂O₃. Am Übergang zwischen diesem ersten Vorstoffund dem Festelektrolytmaterial, insbesondere dem YSZ, kann sich dann die Pyrochlor-Phase ausbilden, so dass die Isolationsschicht später in zwei Teil-Isolationsschichten unterteilt ist: zum einen die (später wärmebehandelte) Schicht an reinem Pyrochlor-Phasen-Bildner, beispielsweise LaAlO₃, und eine zweite Teilschicht, mit der Pyrochlor-Phasenstruktur, beispielsweise La₂Zr₂O₇. Diese isolierende Doppelschicht hat eine hervorragende isolierende Wirkung.

Eine zweite Möglichkeit des zweiten Konzeptes besteht darin, eine Mischung aus LaAlO₃ und La₂O₃ in dem ersten Vorstoff zu verwenden. Bei diesem Konzept wird die Ausbildung der Pyrochlor-Phase dadurch forciert, dass das Lanthan (beziehungsweise ein anderes Lanthanid) durch Zugabe von La₂O₃ zu einer LaAlO₃-Durchisolierungspaste überstöchiometrisch eingesetzt wird (LaAlO₃ + La₂O₃). Die Vorteile des oben beschriebenen Konzeptes der Verwendung von LaAlO3 als Durchisolationsmaterial (erster Vorstoff) bleiben weitgehend erhalten. Zusätzlich wird eine verbesserte Ausbildung der Pyrochlor-Phase mit einer erhöhten Schichtdicke gebildet. Wiederum bildet sich bei der Wärmebehandlung in der Isolationsschicht der oben beschriebene Zweischicht-Aufbau aus, mit einer Pyrochlor-Phase und einer Phase gesinterten LaAlO₃.

Eine dritte Möglichkeit des oben dargestellten zweiten Konzepts besteht darin, einen dem Stand der Technik üblichen ersten Vorstoff zu verwenden, also beispielsweise eine Durchisolationspaste. Dieser erste Vorstoff kann gezielt durch die Beigabe eines Lanthanids modifiziert werden, um die oben beschriebene Pyrochlor-Phase auszubilden. Beispielsweise kann wiederum La₂O₃ zu einer gegenwärtig verwendeten Durchisolationspaste oder einer anderen Art von erstem Vorstoff zugegeben werden. Beispielsweise kann der konventionelle erste Vorstoff, dem das La₂O₃ beigemischt wird, wiederum Al₂O₃ enthalten. Auch bei dieser Konzeptvariante wird beispielsweise durch die Ausbildung einer La₂Zr₂O₇-Pyrochlor-Phase an einer Grenzfläche zwischen Festelektrolyt (z.B. YSZ), La₂O₃ und Al₂O₃ eine erhöhte Isolationsfestigkeit bewirkt. Da die gegenwärtig eingesetzten Durchisolationspasten zumeist im Wesentlichen aus Al₂O₃ bestehen, muss hier jedoch in der Regel wegen der möglichen Ausbildung von LaAlO₃-Perowskiten die Zusammensetzung eines ersten Vorstoffs genau abgestimmt werden.

Das dargestellte Konzept, bei welchem die Lanthanide und Pyrochlor-Phasen-Bildner der Isolationspaste beigemischt werden, kann dahingehend verändert bzw. abgewandelt werden, dass gezielt LaAlO₃ beim Sinterprozess gebildet wird. Die Zusammensetzung ist dabei jedoch derart abzustimmen, dass sich neben dem LaAlO₃ auch die Pyrochlor-Grenzfläche ausbildet, beispielsweise die La₂Zr₂O₇-Grenzfläche. Nach dem Wärmebehandlungsschritt bzw. Sintervorgang sollten möglichst keine La₂O₃-Reste verbleiben.

Abschließend sei noch darauf hinzuweisen, dass sich das oben beschriebene Sensorelement und das Herstellungsverfahren in jeweils einer möglichen Ausgestaltung speziell an die jeweilige Ausgestaltung des leitenden Elements anpassen lassen. So ist bei dem bzw. den Vorstoffen von einem "Aufbringen auf" die Festelektrolytschicht die Rede gewesen. Je nach Ausgestaltung des leitenden Elements ist dieses Aufbringen naturgemäß teilweise auch als "Einbringen in" zu verstehen. So kann beispielsweise eine Durchkontaktierung hergestellt werden, bei welcher durch das leitende Element (d.h. in diesem Fall die Durchkontaktierung) mindestens zwei auf gegenüberliegenden Seiten der Festelektrolytschicht angeordnete elektrische Elemente elektrisch verbunden werden. Hierbei kann beispielsweise derart vorgegangen werden, dass mindestens eine Öffnung in der mindestens einen Festelektrolytschicht erzeugt wird. Anschließend wird der Vorstoff (bzw. nacheinander die verschiedenen Vorstoffe) wird in die mindestens eine Öffnung eingebracht, derart, dass der Vorstoff die mindestens eine Öffnung zumindest teilweise ausfüllt. In diesem Fall ist also das Aufbringen des mindestens einen Vorstoffs als ein Einbringen des mindestens einen Vorstoffs in eine Öffnung zu verstehen. In diesem Fall kann die Oberfläche der Festelektrolytschicht, auf welche der mindestens eine Vorstoff aufgebracht wird, als (z.B. kreiszylinderförmige) Innenoberfläche einer Öffnung in der Festelektrolytschicht ausgestaltet sein. Auch andere Oberflächengeometrien der Oberfläche der Festelektrolytschicht, auf welche der mindestens eine Vorstoff aufgebracht wird, sind denkbar. Insofern zeichnet sich das vorgeschlagene Verfahren durch eine hohe Flexibilität hinsichtlich des Designs aus.

### Kurze Beschreibung der Zeichnungen

Ausführungsbeispiele der Erfindung sind in den Zeichnungen dargestellt und in der nachfolgenden Beschreibung näher erläutert. Es zeigen
- Figuren 1A bis 1H: ein erstes Ausführungsbeispiel eines erfindungsgemäßen Verfahrens zur Herstellung eines Sensorelements mit getrennter Aufbringung von Isolationsschicht und leitendem Element zur Erzeugung einer Durchkontaktierung;
- Figuren 2A bis 2C: ein Ausführungsbeispiel eines einstufigen Verfahrens, bei welchem Isolationsschicht und leitendes Element der Durchkontaktierung in einem einzelnen Verfahrensschritt aufgebracht werden; und
- Figuren 3A bis 3E: ein drittes Ausführungsbeispiel eines erfindungsgemäßen Verfahrens, bei welchem zusätzlich zu einer Durchkontaktierung eine Zuleitung mit einer Anschlussfläche aufgebracht wird.

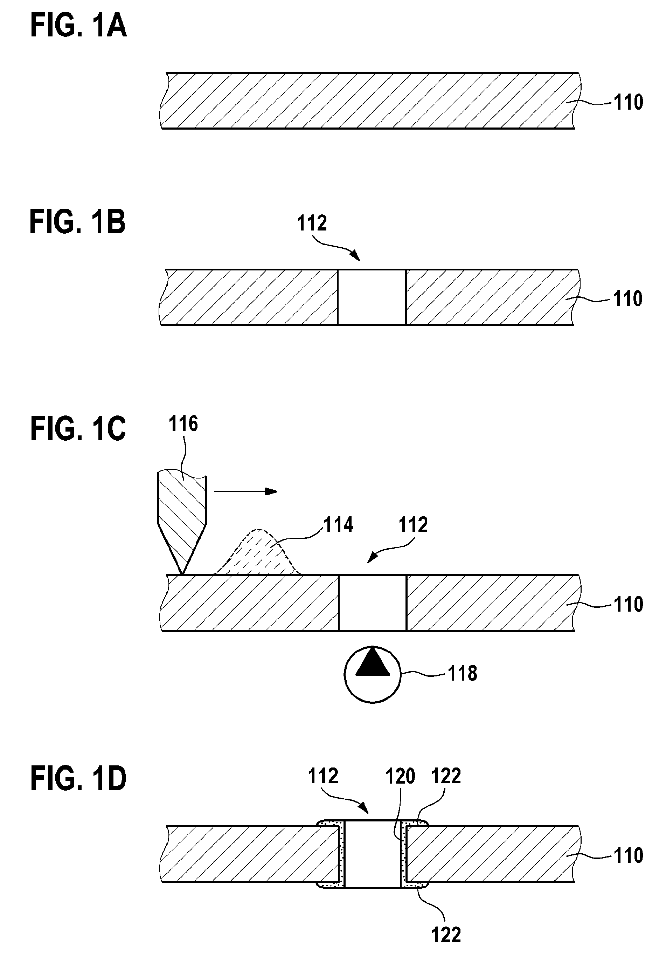

In den Figuren 1A bis 1H ist das oben beschriebene zweistufige Verfahrenskonzept zur Erzeugung einer Isolationsschicht beispielhaft dargestellt. Die einzelnen Verfahrensschritte sind jeweils symbolisch angedeutet, wobei die bevorzugte Reihenfolge der Durchführung der Verfahrensschritte gezeigt ist. Es können jedoch weitere, nicht dargestellte Verfahrensschritte vorgesehen sein, und es können einige oder mehrere Verfahrensschritte in anderer Reihenfolge, wiederholt oder zeitlich parallel durchgeführt werden. Das Verfahren wird hierbei am Beispiel einer Herstellung einer Durchkontaktierung beschrieben. Alternativ oder zusätzlich könnten jedoch auch andere Arten von leitenden Elementen auf die Festelektrolytschicht aufgebracht werden, wofür das dargestellte Verfahren lediglich geringfügig zu modifizieren wäre.

Ausgegangen wird bei diesem Herstellungsverfahren von einer Festelektrolytschicht 110. Wie oben dargelegt, handelt es sich bei dem Festelektrolyten 110 vorzugsweise um Yttrium-stabilisiertes Zirkondioxid (YSZ). Es können jedoch auch Festelektrolyte 110 mit einem Mehrschichtaufbau verwendet werden, beispielsweise indem mehrere Festelektrolytfolien in einem mehrschichtigen Aufbau verwendet werden. Auch können auf der Festelektrolytschicht 110 Isolationsschichten aufgebracht sein, um bestimmte Bereiche der Festelektrolytschicht 110 auf der Oberfläche elektrisch zu isolieren. Die Festelektrolytschicht 110 ist symbolisch in Figur 1A dargestellt.

In einem nächsten Verfahrensschritt, welcher in Figur 1B symbolisch dargestellt ist, wird mindestens eine Öffnung 112 in die Festelektrolytschicht 110 eingebracht. Dies kann beispielsweise mittels eines mechanischen, Bohr- und/oder Stanzverfahrens erfolgen, oder es kann, alternativ oder zusätzlich, beispielsweise auch ein Laser-Bohr- oder Ablationsverfahren eingesetzt werden. Auch wäre es denkbar, die mindestens eine Öffnung 112 bereits bei der Herstellung der Festelektrolytschicht 110 zu erzeugen, beispielsweise indem entsprechende Formen oder Werkzeuge zur Herstellung dieser Festelektrolytschicht verwendet werden, die bereits diese Öffnung 112 generieren. Dies soll im Rahmen der vorliegenden Erfindung ebenfalls unter dem Begriff "erzeugen" verstanden werden. Weitere Möglichkeiten zur Erzeugung der Öffnung 112 sind denkbar.

Anschließend wird mindestens ein erster Vorstoff 114 in die Öffnung 112 eingebracht. Dieser erste Vorstoff 114 kann beispielsweise in Form einer Durchisolationspaste vorliegen, welche mittels einer Rakel 116 in die Öffnung 112 eingebracht wird. Wie oben dargelegt, kann dieser mindestens eine erste Vorstoff beispielsweise La₂O₃, LaAlO₃, Mischungen aus diesen Substanzen, andere Lanthanid-Verbindungen oder eine Mischung aus einem herkömmlichen Isolationsmaterial und derartigen Lanthanid-Verbindungen enthalten. Im Folgenden sei angenommen, dass es sich bei diesem ersten Vorstoff 114 um eine Mischung aus Al₂O₃ und La₂O₃ handelt. Weiterhin enthält der erste Vorstoff 114 vorzugsweise noch Materialien, welche diesen ersten Vorstoff 114 verformbar gestalten, beispielsweise geeignete Bindermaterialien, Lösungsmittel oder ähnliche Materialien, beispielsweise Materialien, welche eine Thixotropie bewirken.

Das Aufbringen wird dabei derart durchgeführt, dass der erste Vorstoff 114 mittels des Rakels 116 in die Öffnung 112 gestrichen wird. Um eine vollständige Benetzung der Öffnungswände zu gewährleisten, wird dieses Einbringen durch ein auf der Unterseite der Festelektrolytschicht 110 herrschendes Vakuum (hier symbolisch angedeutet durch die Bezugsziffer 118) unterstützt. Dieser Schritt wird auch als "Durchsaugen" durch die Öffnung 112 bezeichnet.

Bei diesem Durchsaugen bildet sich, je nach Oberflächenspannung, Viskosität und sonstiger Beschaffenheit des ersten Vorstoffs 114 sowie der eingebrachten Menge, eine erste Vorstoffschicht 120 aus, welche die Wände der Öffnung 112 vorzugsweise vollständig bedeckt und welche beidseitig auf den Oberflächen der Festelektrolytschicht 110 Überstände 122 bildet (siehe Figur 1D).

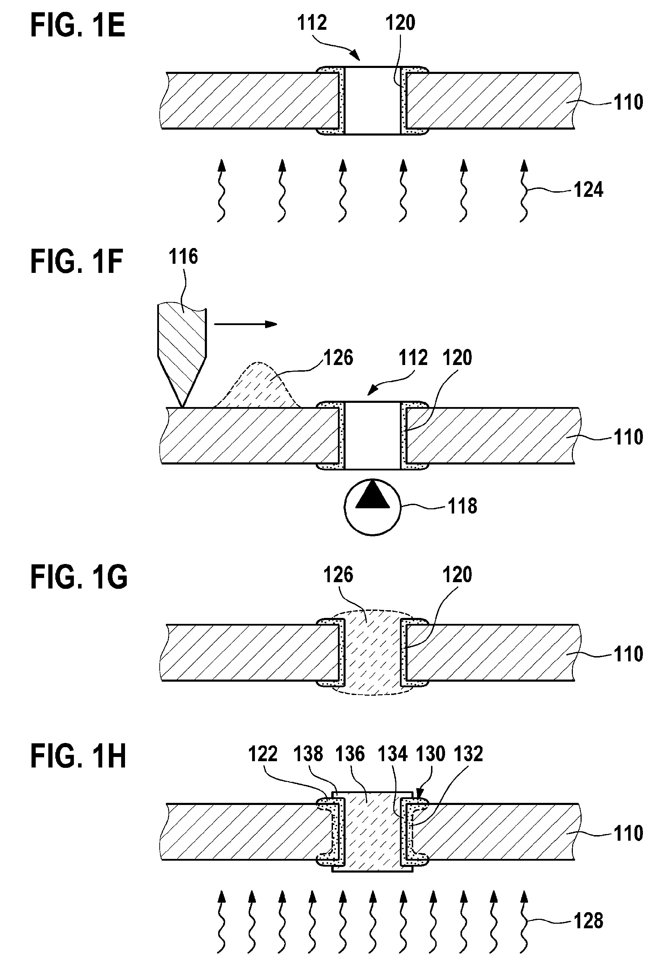

Diese erste Vorstoffschicht 120 kann anschließend (siehe Figur 1E) optional einem Trocknungsschritt unterzogen werden, wobei die Trocknung in Figur 1E symbolisch mit der Bezugsziffer 124 bezeichnet ist. Dabei handelt es sich in der Regel um eine "schonende" Trocknung, also eine Trocknung, bei welcher noch keine nennswerten chemischen Reaktionen ablaufen, sondern bei welcher beispielsweise Lösungsmittel aus dem ersten Vorstoff 114 ausgetrieben wird. Diese Trocknung 124 kann beispielsweise auf einer Heizplatte, in einem Ofen, einem Vakuumofen oder durch Beblasen mit Heißluft erfolgen. Auch komplexere Trocknungsmechanismen sind möglich.

Anschließend wird (siehe Figur 1F) ein zweiter Vorstoff 126 in die verbleibende Öffnung 112 eingebracht. Dieser zweite Vorstoff 126 kann beispielsweise eine Durchkontaktierungspaste aufweisen, die konventionell bereits heute bei der Herstellung von Durchkontaktierungen verwendet wird. Wiederum kann zu diesem Zweck der zweite Vorstoff 126, neben geeigneten leitfähigen Partikeln, optional weitere Zusätze, wie z.B. Bindermaterialien und/oder Lösungsmittel, aufweisen. Derartige Durchkontaktierungsmaterialien, insbesonder Durchkontaktierungspasten, sind dem Fachmann aus dem Bereich der Sensorherstellung keramischer Sensoren bekannt.

Wiederum kann das Einbringen des zweiten Vorstoffs 126, analog zu Figur 1C, durch ein Vakuum 118 unterstützt werden, so dass wiederum ein "Durchsaugen" durchgeführt wird. Dabei kann die verbleibende Öffnung 112, wie in Figur 1G dargestellt, ganz oder teilweise mit dem zweiten Vorstoff 126 ausgefiillt werden. In Figur 1G ist ein Fall dargestellt, bei welchem die Öffnung 112 vollständig durch den zweiten Vorstoff 126 verschlossen wird. Es sind jedoch auch Durchkontaktierungen möglich, bei welchen wiederum nur der Rand der Öffnung 112 durch den zweiten Vorstoff 126 benetzt wird, so dass sich eine zweite Vorstoffschicht auf der ersten Vorstoffschicht 120 ausbildet.

Anschließend kann (nicht dargestellt) der Aufbau gemäß Figur 1G wiederum einem Trocknungsschritt, analog zu Figur 1E, unterzogen werden. Wiederum können anschließend weitere Schichten aufgebaut werden, bis schließlich ein mehrschichtiger Aufbau als Grünling fertiggestellt ist.

Anschließend wird in einem in Figur 1H dargestellten Verfahrensschritt dieser Grünling einem Wärmebehandlungsschritt in Form eines Sinterprozesses unterzogen. Diese Wärmebehandlung in Form von Sintern ist in Figur 1H symbolisch mit der Bezugsziffer 128 bezeichnet. Hier wie auch in anderen Ausführungsbeispielen der vorliegenden Erfindung lassen sich beispielsweise Sinterprozesse bei 122°C bis 1500°C einsetzen, beispielsweise über mehrere Stunden hinweg. Dabei sind auch komplexere Temperaturbehandlungen möglich, beispielsweise mehrstufige Verfahren, bei welchen über verschiedene Zeitdauern hinweg bei verschiedenen Temperaturen gesintert wird und/oder bei welchen Temperaturrampen mit einem langsamen oder schnellen Temperaturanstieg und/oder einem Temperaturabfall über eine vorgegebene Zeitdauer hinweg verwendet werden.

Das Sintern 128 bzw. der Wärmebehandlungsschritt bewirkt mehrere Prozesse, welche im wesentlichen gleichzeitig oder zeitlich parallel ablaufen können. So bildet sich zum einen eine in diesem Ausführungsbeispiel zweischichtige Isolationsschicht 130 aus. Die Isolationsschicht 130 weist aufgrund der Reaktion der ersten Vorstoffschicht 120 beim Sintern mit dem Material des Festelektrolyten 110 eine Pyrochlor-Phasenschicht 132 auf, welche in die Festelektrolytschicht 110 hineinragt. Wie oben beschrieben, entsteht diese Pyrochlor-Phasenschicht 132 durch Reaktion beispielsweise des Na₂O₃ mit dem YSZ zu La₂Zr₂O₇.

Daneben weist die Isolationsschicht 130 eine innenliegende Schicht 134 auf, in welcher das Isolationsmaterial des ersten Vorstoffs 120 in gesinterter Form im wesentlichen rein vorliegt. Beispielsweise kann in dieser Schicht gesintertes Al₂O₃, gesintertes LaAlO₃, gesinteres La₂O₃ oder eine Mischung dieser und/oder anderer Materialien vorliegen. Wie oben beschrieben, weisen diese Materialien gute Isolationseigenschaften auf. Die Isolationsschicht 130 ist somit in diesem Ausführungsbeispiel als Doppelschicht ausgebildet, wobei der Übergang zwischen den beiden Schichten 132 und 134 jedoch fließend erfolgen kann.

Weiterhin bildet sich beim Sintern 128 aus dem zweiten Vorstoff 126 im Inneren der Öffnung 112 ein leitendes Element 136 aus. Beispielsweise kann dieses leitende Element 136 wiederum Platin in poröser Form aufweisen. Beispielsweise kann das leitende Element 136 wiederum Überstände 138 auf der Oberseite und der Unterseite aufweisen, welche nicht über die Überstände 122 der Isolationsschicht 130 hinausragen. Auf diese Weise ist vorzugsweise eine allseitige Isolation zwischen dem leitenden Element 136 und der Festelektrolytschicht 110 gewährleistet.

Es sei darauf hingewiesen, dass der in den Figuren 1A bis 1H dargestellte Verfahrensablauf und Aufbau des Sensorelements bzw. eines Teils des Sensorelements lediglich stark vereinfacht gezeigt ist. Nicht gezeigt sind beispielsweise elektrische Elemente, welche durch das leitende Element 136 kontaktiert werden. Beispielsweise können diese elektrischen Elemente auf der Ober- und/oder Unterseite jeweils mit den Enden des leitenden Elements 136 in Verbindung stehen oder nachträglich in Verbindung gebracht werden. Auch diese Verbindung kann beispielsweise (zum Beispiel durch vorheriges entsprechendes Aufbringen von Leitpasten) während des Sinterschrittes 128 hergestellt werden.

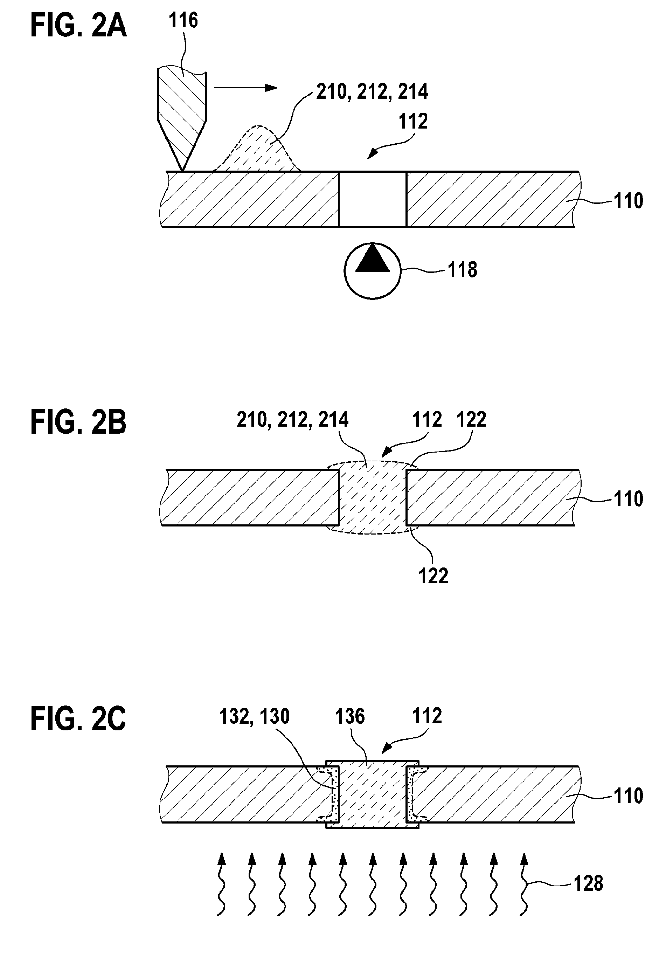

In den Figuren 2A bis 2C ist schematisch ein Ausführungsbeispiel eines Herstellungsverfahrens analog zu den Figuren 1A bis 1H dargestellt, welches jedoch ein einstufiges Verfahren realisiert. Auch dieses Verfahren ist wiederum am Beispiel einer Durchkontaktierung aufgezeigt, wobei jedoch, alternativ oder zusätzlich, wiederum auch andere Arten von leitenden Elementen durch dieses einstufige Verfahren gegenüber der Festelektrolytschicht isoliert werden können.

Wiederum wird eine Festelektrolytschicht 110 verwendet, in welche zunächst (analog zu den Figuren 1A und 1B oben) eine Öffnung 112 eingebracht wird (dieser Verfahrensschritt ist nicht dargestellt). Anschließend wird (siehe Figur 2A) ein Vorstoff 210 in die Öffnung 112 eingebracht. Dies kann wiederum beispielsweise durch ein Rakel 116 erfolgen. Wie auch in dem in den Figuren 1A bis 1H dargestellten Ausführungsbeispiel sind jedoch auch andere Arten der Einbringung des Vorstoffs 210 denkbar, beispielsweise Druckverfahren, Dispensierverfahren, Tauchverfahren, Sprühverfahren oder andere Verfahren oder Kombinationen dieser und/oder anderer Verfahren. Die Eigenschaften des Vorstoffs 210 (zum Beispiel Viskosität, Oberflächenspannung und ähnliche Eigenschaften) müssen dementsprechend auf diese Aufbringungsart angepasst werden.

Bei dem in den Figuren 2A bis 2C dargestellten Ausführungsbeispiel weist der Vorstoff 210 zwei Vorstoffkomponenten 212 und 214 auf. Diese beiden Vorstoffkomponenten 212, 214 stellen sicher, dass die Herstellung einer Isolationsschicht und die Herstellung eines leitenden Elements (siehe unten) in einem Verfahrensschritt erfolgen kann. In anderen Worten kann bei diesem Ausführungsbeispiel ein Isolationsbildner einer Durchkontaktierungspaste beigemischt werden. Der Isolationsbildner (erste Vorstoffkomponente 212) ist eingerichtet, um bei einem späteren Sinterprozess mit dem Material der Festelektrolytschicht 110 die Isolationsschicht zu bilden, insbesondere die Pyrochlor-Phase der Isolationsschicht. Die zweite Vorstoffkomponente 214 bildet später das leitende Element oder einen Teil dieses leitenden Elements (welches hier wie auch in anderen Ausführungsbeispielen der vorliegenden Erfindung auch mehrere leitende Schichten aufweisen kann).

Der Vorstoff wird, wie in Figur 2B zu erkennen ist, derart in die Öffnung 112 eingebracht, dass die Wände der Öffnung vollständig bedeckt sind. Wiederum kann dabei optional auch ein Überstand 122 auf der Ober- und Unterseite des Festelektrolyten 110 entstehen. Auch komplexere Strukturen lassen sich auf diese Weise auf der Festelektrolytschicht 110 erzeugen, beispielsweise Leiterbahnstrukturen, so dass aus dem Material des Vorstoffs 210 gleichzeitig auch elektrische Elemente auf den Oberflächen des Festelektrolytmaterials 110 erzeugt werden können.

Anschließend kann (nicht dargestellt) der Vorstoff 210 einem Trocknungsschritt unterzogen werden, analog beispielsweise zum Trocknungsschritt 124 in Figur 1E. Auf diese Weise können anschließend beispielsweise weitere Schichten aufgebracht werden, ohne dass der in die Öffnung 112 eingebrachte Vorstoff 210 seine Form wesentlich verändert. Bei diesem Trocknungsschritt können wiederum, analog zu oben, beispielsweise Lösungsmittelbestandteile aus dem Vorstoff 210 ganz oder teilweise entweichen.

Anschließend wird (beispielsweise nachdem weitere Schichten aufgebracht worden sind, oder auch unmittelbar) der Aufbau (Festelektrolytschicht 110 mit in die Öffnung 112 eingebrachtem Vorstoff 210) einem Wärmebehandlungsschritt in Form von Sintern 128 unterzogen. Bei diesem Sintern 128 wird, wie oben dargestellt, aus der zweiten Vorstoffkomponente im Inneren der ehemaligen Öffnung 112 das leitende Element 136. Es sei, wie auch am Beispiel der Figur 1G dargestellt, darauf hingewiesen, dass in der Figur 2B und in der Figur 2C der erste Vorstoff 210 und das leitende Element 136 die Öffnung 112 vollständig ausfüllen. Dies ist jedoch nicht notwendigerweise der Fall, sondern es kann beispielsweise auch ein Benetzen der Ränder der Öffnung stattfinden, so dass eine Struktur entsteht ähnlich zur ersten Vorstoffschicht 120 in Figur 1F, bei welcher lediglich die Ränder der Öffnung 112 bedeckt sind.

Weiterhin wird darauf hingewiesen, dass in dem beschriebenen Ausführungsbeispiel, das "Durchsaugen" beispielhaft lediglich durch eine einzelne Öffnung 112 erfolgt. Im vorliegenden wie auch in anderen Ausführungsbeispielen der Erfindung könnte jedoch auch ein so genanntes "Stapelsaugen" erfolgen. Beim Stapelsaugen werden mehrere Substrate, beispielsweise wiederum Festelektrolytschichten 110, übereinandergelegt und mit einer oder mehreren Öffnungen 112 versehen. Durch ein Vakuum 118 werden dann der bzw. die Vorstoffe 114, 126, 210 (je nach angewandtem Prozess) nacheinander oder ganz oder teilweise gleichzeitg durch die Öffnung bzw. Öffnungen gezogen.

Weiterhin bildet sich bei dem Sinterschritt 128, zeitgleich oder parallel zur Ausbildung des leitenden Elements 136, am Rand der Öffnung 112 im Randbereich des Festelektrolyten 110 wiederum eine Pyrochlor-Phasenschicht 132 aus. Diese entsteht, wie oben beschrieben, beispielsweise durch Reaktion von La₂O₃ aus der ersten Vorstoffkomponente 212 mit ZrO₂ der Festelektrolytschicht 110 zu La₂Zr₂O₇. Da, wie oben beschrieben, diese Pyrochlor-Phasenschicht 132 gute isolierende Eigenschaften aufweist, bildet diese Pyrochlor-Phasenschicht 132 in diesem Ausführungsbeispiel die Isolationsschicht 130. Diese Isolationsschicht 130 isoliert das leitende Element 136 elektrisch gegen den Festelektrolyten 110. Auf diese Weise ist in einem "einstufigen" Verfahren eine Durchkontaktierung zwischen den beiden gegenüberliegenden Oberflächen der Festelektrolytschicht 110 hergestellt, welche isoliert ist gegenüber dem Festelektrolytmaterial.

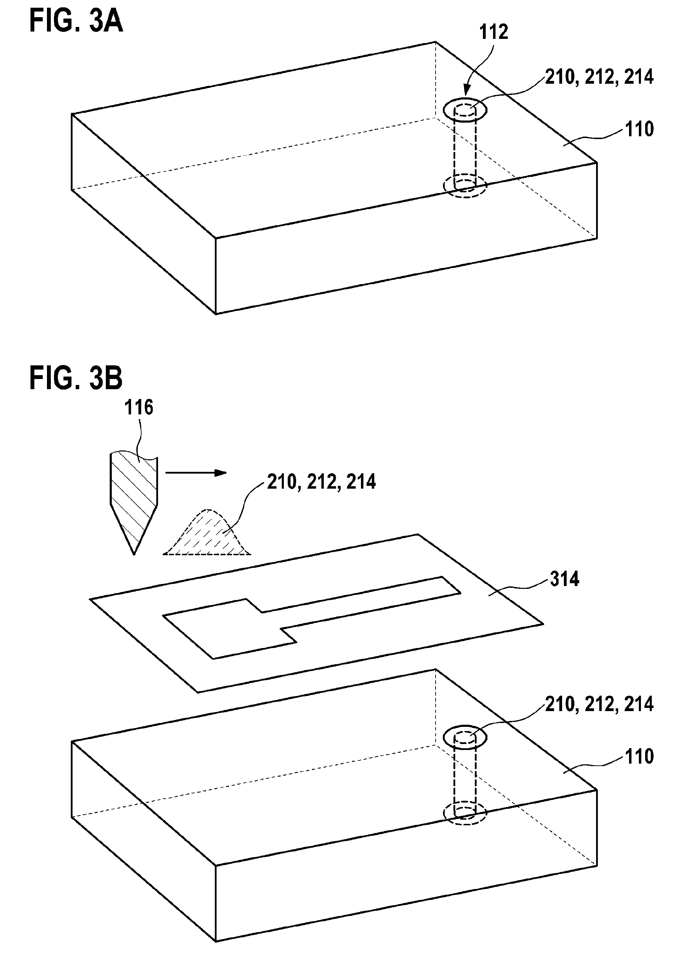

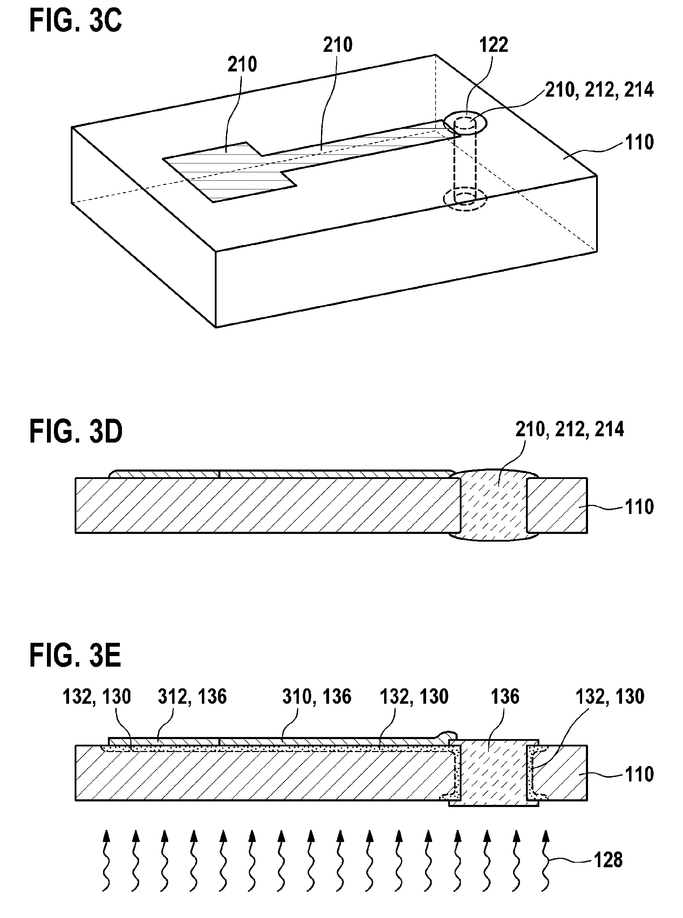

In den Figuren 3A bis 3E ist ein Ausführungsbeispiel eines erfindungsgemäßen Verfahrens dargestellt, welches zeigt, dass mittels der vorgeschlagenen Pyrochlor-Phasenbildung nicht nur Durchkontaktierungen wie in den beiden vorhergehenden Ausführungsbeispielen hergestellt werden können, sondern, alternativ oder zusätzlich, auch nahezu beliebig geformte elektrische Elemente auf Oberflächen der Festelektrolytschicht 110. Dies soll in den Figuren 3A bis 3E exemplarisch an der Herstellung einer elektrischen Zuleitung 310 mit einer Kontaktfläche 312 (siehe Figur 3E). Dabei ist exemplarisch die Herstellung einer elektrischen Zuleitung 310 gezeigt, welche eine Durchkontaktierung elektrisch mit der Kontaktfläche 312 verbindet. Es sind jedoch, alternativ oder zusätzlich, auch andere Arten elektrischer Zuleitungen 310 realisierbar, beispielsweise ohne Durchkontaktierungen, sowie andere Arten elektrischer Elemente auf nahezu beliebig geformten Oberflächen des Festelektrolyten 110.

Prinzipiell lassen sich wiederum mehrschichtige Verfahrensvarianten einsetzen, wie beispielsweise in den Figuren 1A bis 1H gezeigt, oder einschichtige Verfahrensvarianten gemäß den Figuren 2A bis 2C. Die Ausführungsbeispiele in den Figuren 3A bis 3E basieren auf der einschichtigen Verfahrensvariante. Der Fachmann kann diese jedoch leicht auf mehrschichtige Aufbauten ergänzen.

Ausgangspunkt in dem in den Figuren 3A bis 3E dargestellten Ausführungsbeispiel ist ein Festelektrolyt 110 gemäß dem Zwischenprodukt in Figur 2B. Dies bedeutet insbesondere, dass die Festelektrolytschicht 110 wiederum eine Öffnung 112 aufweist, welche, beispielsweise durch das in Figur 2A dargestellte Verfahren, mit einem Vorstoff 210 mit einer ersten Vorstoffkomponente 212 und einer zweiten Vorstoffkomponente 214 gefüllt ist. Es kann dementsprechend auf die obige Beschreibung verwiesen werden. Wie bereits erwähnt, ist dieser Verfahrensschritt optional, und es kann auch von anders gestalteten Zwischenprodukten (beispielsweise einer reinen Festelektrolytschicht 110 ohne Öffnung 112) ausgegangen werden.

Dieses Zwischenprodukt, welches in Figur 3A dargestellt ist, kann beispielsweise einem optionalen Trocknungsschritt unterzogen werden, beispielsweise um ein Zerfließen des Vorstoffs 210 in der Öffnung 112 in den nachfolgenden Verfahrensschritten zu verhindern. Dabei können wiederum flüchtige Bestandteile des Vorstoffs 210 ausgetrieben werden, beispielsweise Lösungsmittel und/oder organische Komponenten.

Anschließend wird eine Vorstruktur der elektrischen Zuleitung 310 und der Kontaktfläche 312 auf den derart vorbereiteten Festelektrolyten 110 aufgebracht. Dies kann, wie in Figur 3B angedeutet, beispielsweise durch ein Druckverfahren, insbesondere ein Siebdruckverfahren, oder ein Schablonendruckverfahren erfolgen. Zu diesem Zweck wird beispielsweise, wie in Figur 3B angedeutet, eine Schablone 314 verwendet, welche Öffnungen aufweist, die zumindest näherungsweise (d.h. zum Beispiel abgesehen von möglichen Schrumpfungs- oder Ausdehnungseffekten) die äußere Form der elektrischen Zuleitung 310 und der Kontaktfläche 312 hat, die mittels dieses Verfahrens hergestellt werden sollen. Durch diese Schablone 314 kann wiederum ein Vorstoff 210 auf die Oberseite der Festelektrolytschicht 110 aufgedruckt werden. Beispielsweise kann dieser Vorstoff 210 wieder zwei Vorstoffkomponenten, 212, 214 gemäß der obigen Beschreibung umfassen, wobei die erste Vorstoffkomponente 212 den Pyrochlor-Phasenbildner aufweist. Wird ein mehrschichtiges Verfahren verwendet, so kann der in Figur 3B dargestellte Schritt wiederholt durchgeführt werden, beispielsweise indem zunächst ein erster Vorstoff 114 und anschließend ein zweiter Vorstoff 126 aufgebracht wird, analog zur obigen Beschreibung der Figuren 1A bis 1H. Dazwischen können eine oder mehrere Trocknungsschritte vorgesehen sein. Zudem können auch mehrere Oberflächen der Festelektrolytschicht 110 auf diese Weise vorbereitet und bedruckt werden. Neben Druckverfahren lassen sich auch andere Verfahren einsetzen, beispielsweise Dispensierverfahren, Sprühverfahren, Bestäubungsverfahren oder andere Arten der strukturierten Aufbringung des Vorstoffs 210.

In Figur 3C ist das derart vorbereitete Zwischenprodukt in persprktivischer Darstellung gezeigt, bei welchem im Bereich der späteren Zuleitung 310 und der Kontaktfläche 312 der Vorstoff 210 bereits näherungsweise der späteren Form entspricht. Dabei ist im Bereich der späteren elektrischen Zuleitung 310 der Vorstoff 210 derart strukturiert, dass dieser hier mit dem Überstand 122 im Bereich der Durchkontaktierung überlappt, um später dort eine elektrische Verbindung herzustellen. Dies ist in Figur 3D zu erkennen, welches das Zwischenprodukt gemäß Figur 3C in Schnittdarstellung von der Seite zeigt. Das derart gewonnene Zwischenprodukt kann beispielsweise wieder einem oder mehreren Trocknungsschritten unterzogen werden, beispielsweise um ein nachfolgendes Aufbringen zusätzlicher Schichten und/oder Elemente zu ermöglichen.

Anschließend wird das derart vorbereitete Zwischenprodukt gemäß den Figuren 3C und 3D (d.h. gegebenenfalls nach Aufbringen zusätzlicher Schichten oder weiterer Verfahrensschritte) einem Sinterschritt unterzogen, was in Figur 3E mit der Bezugsziffer 128 angedeutet ist. Wie oben beispielsweise anhand von Figur 2C dargestellt, bildet sich am Übergang zwischen dem Vorstoff 210 und der Festelektrolytschicht 110 jeweils durch Reaktion der ersten Vorstoffkomponente 212 mit dem Material der Festelektrolytschicht 110 eine Pyrochlor-Phasenschicht 132, welche in diesem Ausführungsbeispiel die Isolationsschicht 130 bildet. Auf diese Weise sind die leitenden Elemente, also in diesem Fall die elektrische Zuleitung 310, die Kontaktfläche 312 sowie das leitende Element 136 innerhalb der Öffnung 112, elektrisch gegenüber der Festelektrolytschicht 110 isoliert.

## Patentansprüche

1. Sensorelement zur Messung mindestens einer Eigenschaft eines Gases in einem Gasraum, insbesondere zur Bestimmung einer Sauerstoffkonzentration im Abgas einer Brennkraftmaschine, wobei das Sensorelement mindestens eine Festelektrolytschicht (110) umfasst, auf welcher mindestens ein leitendes Element (136; 310, 312) angeordnet ist, wobei zwischen dem leitenden Element (136; 310, 312) und der Festelektrolytschicht (110) mindestens eine Isolationsschicht (130) angeordnet ist, **dadurch gekennzeichnet, dass** die Isolationsschicht (130) eine Pyrochlor-Phase (132) aufweist.

2. Sensorelement nach dem vorhergehenden Anspruch, wobei das leitende Element (136; 310, 312) mindestens eines der folgenden leitenden Elemente (136; 310, 312) umfasst: ein leitendes Element (136), durch welches mindestens zwei auf gegenüberliegenden Seiten der Festelektrolytschicht (110) angeordnete elektrische Elemente elektrisch verbunden sind, insbesondere eine Durchkontaktierung; eine Leiterbahn auf einer Oberfläche der Festelektrolytschicht (110); eine Kontaktfläche (312) auf einer Oberfläche der Festelektrolytschicht (110); eine elektrische Zuleitung (310) auf einer Oberfläche der Festelektrolytschicht (110).

3. Sensorelement nach einem der beiden vorhergehenden Ansprüche, wobei die Isolationsschicht (130) mindestens ein Lanthanid aufweist.

4. Sensorelement nach einem der vorhergehenden Ansprüche, wobei die Isolationsschicht (130) Ln₂₊ₓZr₂₋ₓO_{7-x/2} aufweist, insbesondere Ln₂Zr₂O₇, wobei Ln ein Element der Lanthanide ist.

5. Sensorelement nach einem der beiden vorhergehenden Ansprüche, wobei da mindestens ein Lanthanid mindestens eines der folgenden Elemente aufweist: La, Sm, Eu, Gd.

6. Sensorelement nach einem der vorhergehenden Ansprüche, wobei die Isolationsschicht (130) eine Oxidionenleitfähigkeit aufweist, wobei die Gesamtleitfähigkeit bei 600°C bis 800°C im Bereich zwischen 10⁻² und 10⁻⁷ S/cm oder darunter liegt.

7. Sensorelement nach einem der vorhergehenden Ansprüche, wobei die Pyrochlor-Phase (132) einen thermischen Ausdehnungskoeffizienten bei 600°C bis 800°C im Bereich zwischen 5·10^{*-*6} K⁻¹ und 5·10⁻⁵ K⁻¹, insbesondere bei 1·10⁻⁵ K⁻¹, liegt.

8. Verfahren zur Herstellung eines Sensorelements zur Messung mindestens einer Eigenschaft eines Gases in einem Gasraum, insbesondere zur Herstellung eines Sensorelements nach einem der vorhergehenden Ansprüche, wobei das Sensorelement mindestens eine Festelektrolytschicht (110) umfasst, auf welcher mindestens ein leitendes Element (136; 310, 312) angeordnet ist, wobei das Verfahren folgende Schritte aufweist:
- mindestens ein verformbarer Vorstoff (120, 126; 210), insbesondere eine Paste, wird zumindest auf einen Bereich der Festelektrolytschicht (110) aufgebracht;
- die Festelektrolytschicht (110) mit dem Vorstoff (120, 126; 210) wird einer Wärmebehandlung (128), insbesondere einem Sinterschritt, unterzogen,
**dadurch gekennzeichnet, dass** der Vorstoff (120, 126; 210) derart gewählt ist, dass dieser sich zumindest teilweise bei der Wärmebehandlung (128) mit einem Teil der Festelektrolytschicht (110) in eine Isolationsschicht (130) umwandelt, wobei die Isolationsschicht (130) eine Pyrochlor-Phase (132) aufweist.

9. Verfahren nach dem vorhergehenden Anspruch, wobei durch das leitende Element (136; 310, 312) mindestens zwei auf gegenüberliegenden Seiten der Festelektrolytschicht (110) angeordnete elektrische Elemente elektrisch verbunden werden, mit zusätzlich folgenden Schritten:
- mindestens eine Öffnung (112) wird in der Festelektrolytschicht (110) erzeugt;
- der Vorstoff (120, 126; 210) wird in die mindestens eine Öffnung (112) eingebracht, derart, dass der Vorstoff (120, 126; 210) die mindestens eine Öffnung (112) zumindest teilweise ausfüllt.

10. Verfahren nach einem der beiden vorhergehenden Ansprüche, wobei der Vorstoff (120, 126; 210) mindestens ein Lanthanid aufweist.

11. Verfahren nach dem vorhergehenden Anspruch, wobei der Vorstoff (120, 126; 210) mindestens eines der folgenden Materialien umfasst: LaAlO3, La203; Al2O3.

12. Verfahren nach einem der vorhergehenden Verfahrensansprüche, mit folgenden Schritten:
- mindestens ein erster Vorstoff (120) wird auf den Bereich der Festelektrolytschicht (110), insbesondere in mindestens eine Öffnung (112), aufgebracht;
- der mindestens eine erste Vorstoff (120) wird getrocknet;
- mindestens ein zweiter Vorstoff (126) wird auf den Bereich der Festelektrolytschicht (110), insbesondere in mindestens eine Öffnung (112), aufgebracht;
- die Festelektrolytschicht (110) mit dem mindestens einen ersten Vorstoff (120) und dem mindestens einen zweiten Vorstoff (126) wird der Wärmebehandlung (128) unterzogen,
**dadurch gekennzeichnet, dass** bei der Wärmebehandlung (128) der mindestens eine erste Vorstoff (120) sich zumindest teilweise mit einem Teil der Festelektrolytschicht (110) in die Isolationsschicht (130) umwandelt, wobei der mindestens eine zweite Vorstoff (126) das leitende Element (136; 310, 312) bildet.

13. Verfahren nach dem vorhergehenden Anspruch, wobei der mindestens eine erste Vorstoff (120) LaAlO₃ und/oder eine Mischung von Al₂O₃ mit La₂O₃ aufweist.

14. Verfahren nach einem der beiden vorhergehenden Ansprüche, wobei der mindestens eine zweite Vorstoff (126) eine Mischung aufweist, welche Platin, ZrO₂ und La₂O₃, umfasst.

15. Verfahren nach einem der vorhergehenden Verfahrensansprüche, wobei der mindestens eine Vorstoff (120, 126; 210) eine erste Vorstoffkomponente (212) und eine zweite Vorstoffkomponente (214) aufweist, wobei die mindestens eine erste Vorstoffkomponente (212) und die mindestens eine zweite Vorstoffkomponente (214) gleichzeitig auf den Bereich der Festelektrolytschicht (110), insbesondere in mindestens eine Öffnung (112), aufgebracht werden, wobei die mindestens eine erste Vorstoffkomponente (212) bei der Wärmebehandlung (128) sich zumindest teilweise mit einem Teil der Festelektrolytschicht (110) in die Isolationsschicht (130) umwandelt, wobei die mindestens eine zweite Vorstoffkomponente (214) das leitendes Element (136; 310, 312) bildet.

16. Verfahren nach dem vorhergehenden Anspruch, wobei der mindestens eine Vorstoff (120, 126; 210) mindestens eine der folgenden Zusammensetzungen aufweist: eine Mischung, umfassend Platin und ZrO₂; eine Mischung, umfassend Platin, Al₂O₃ und La₂O₃.
